(19) Europäisches Patentamt
European Patent Office
Office européen des brevets

(11) **EP 1 702 706 B1**

(12) **EUROPEAN PATENT SPECIFICATION**

(45) Date of publication and mention of the grant of the patent:
**29.06.2011 Bulletin 2011/26**

(51) Int Cl.:
***B23K 9/04*** ^(2006.01)

(21) Application number: **04808964.3**

(86) International application number:
**PCT/RU2004/000449**

(22) Date of filing: **05.11.2004**

(87) International publication number:
**WO 2005/053892 (16.06.2005 Gazette 2005/24)**

(54) **METHOD FOR PRODUCING A PIECE OR THE PART THEREOF PROVIDED WITH A WELD DEPOSIT AND A PIECE PRODUCED BY SAID METHOD**

VERFAHREN ZUR HERSTELLUNG EINES STÜCKS ODER DES TEILS DAVON, DAS BZW. DER MIT EINEM SCHWEISSGUT VERSEHEN, UND DURCH DAS VERFAHREN HERGESTELLTE STÜCK

PROCEDE PERMETTANT DE FABRIQUER UNE PIECE DOTEE D'UN REVETEMENT DE RECHARGEMENT OU UNE PARTIE D'UNE TELLE PIECE, ET PIECE PREPAREE A L'AIDE DUDIT PROCEDE

(84) Designated Contracting States:
**AT BE BG CH CY CZ DE DK EE ES FI FR GB GR HU IE IS IT LI LU MC NL PL PT RO SE SI SK TR**

(30) Priority: **02.12.2003 RU 2003135529**

(43) Date of publication of application:
**20.09.2006 Bulletin 2006/38**

(73) Proprietor: **Oy CRS-Technology Ltd.**
**00550 Helsinki (FI)**

(72) Inventors:
• **BABAEV, Andrey Aleksandrovich**
**St.Petersburg, 190068 (RU)**
• **EZUPOV, Dmitri Vladimirovich**
**St.Petersburg, 191028 (RU)**

(74) Representative: **Tanskanen, Jarmo Tapio et al**
**Papula Oy**
**P.O. Box 981**
**00101 Helsinki (FI)**

(56) References cited:
| | |
|---|---|
| **WO-A1-81/03138** | **JP-A- 6 346 708** |
| **JP-A- 10 274 012** | **JP-A- 57 052 557** |
| **SU-A- 635 677** | **SU-A1- 1 687 406** |
| **SU-A1- 15 478 95§** | **US-A- 4 044 217** |
| **US-A- 4 484 959** | |

• **DATABASE WPI Week 199232 Thomson Scientific, London, GB; AN 1992-266553 XP002497412 -& SU 1 687 406 A1 (SIGAEV A A) 30 October 1991 (1991-10-30)**

**Description**

The present invention relates to techniques of electric-arc deposition when repairing worn-out pieces and hardening new pieces, in particular, to a method of producing a piece or a part provided with a wild deposit and a piece according to the preamble of claims 1 and 10 (see, for example, US 4 484 959). It may be advantageously used in any segment of industry, especially in relation to critical pieces working in conditions of variable dynamic forces associated with increased wear and corrosion.

Prior Art

Known is a method of arc deposition of metal on various products, in which the flat surface of a product is successively overlaid with longitudinal beads using hand arc welding by means of stick electrodes made of different materials (see USSR Author's Certificate No. 1,687,406, Cl. B23 K9/04, 1988). A disadvantage of this method consists in that the deposition process is discontinuous and, hence, non-productive.

Known also is a method of automatic arc deposition of metal on products under flux layer, including the steps of helically depositing, by means of a continuous arc, at least one bead of one layer of weld metal and removing the slag crust from the bead thus obtained (see USSR Author's Certificate No. 1,539,011, Cl. B23 K9/04). During the deposition process slag inclusions are developed, resulting in a degraded quality of the coating deposited.

Furthermore, the above-described methods are unable to provide high performance characteristics of products working in conditions of variable dynamic forces.

Also known is a method of fabricating hard-faced parts and a part fabricated by the same (PCT/SU80/036; WO81/03138). This known solution represents the nearest prior art as regards the technical essence of the present invention and the effect achieved thereby. The known method comprises the step of applying to the part an overlay in the form of a multiple-layer weld using electric-arc welding by means of a consumable electrode, followed by the steps of machining and tempering the part. The first layer is applied so as to provide, in at least one direction over the surface of the part, a continuous succession of portions of the first weld layer which protrude into the surface of the part, with the consumable electrode forming said first layer being made of a metal having a linear expansion factor which is less than that of the part.

The same document (PCT/SU80/036; WO81/03138) describes a part fabricated using the above method, which part also represents the nearest prior art. The known part is fabricated in such a manner that the interface between the part and the overlay in the fusion zone is of relief configuration formed by recesses and projections continuously alternating at least in the direction of action of the most hazardous forces arising in the part in the course of operation, wherein residual compression stresses are distributed in the same direction at least within the thickness of the fusion zone.

US-A-4 484959 A discloses a method for producing composite rolls of cold rolling mills by coating or hard-surfacing the base metal that consists of low-alloyed structural steel with harder metal layer, comprising high speed steel. Said high speed steel is supposed to provide hardness higher than 57 Rockwell and to contain the following elements: C=0.5-2.6%, Mn=0.2-1.7%, Si=0.2-1.4%, S<0.2%, V<10% with Mo%+W%+V%+Co% at least equaling to 3%. Multilayer overlaying with automatic or semi-automatic plasma welding is used. Further tempering or hardening with tempering is used. Finally a machining is performed. It also discloses compositions of welding consumables (high-speed steel), providing the demanded hardness of the surface, and the rolls produced according to the mentioned method.

JP 10274012 A discloses a method intended to reduce abrasion wear of a valve seat part of a cylinder head, made of aluminum alloy, and at the same time to provide heat withdrawal from the valve. Padding of metal powder (comprising two types of metals alternating in the circumferential direction of zones: one is pure copper; the other is wear-resistant copper alloy) is implemented on the surface of the valve. As a result, the indicated combination of zones is claimed to provide a reasonable balance of wear-resistance and thermal conductivity of this layer. The mentioned alternation of metal zones also allows saving expensive powder and thus reducing the price of the process.

JP 06346708 discloses a method for increasing the wear-resistance of a slide contact on a cylinder head, made out of aluminum alloy. For this purpose a thin layer of copper alloy is deposited in the circumferential direction (with laser welding) on the surface of the valve. This layer is the base for laser overlaying of a second layer of ferrous alloy, containing chrome carbides that improve the valve seat wear-resistance.

It is known that residual stresses may exert both positive and negative influence on the strength and functional reliability of products. In order to ascertain whether this influence is positive or negative, one must know the amount and distribution pattern of the residual stresses, the amount and nature of application of external loads, and the combination of mechanical properties of the material from which the parts or structures are made; then, only calculations, with various factors taken into account, will permit deciding the issue of the strength, reliability and service life of the parts taking into consideration the influence of the surrounding environment. The above-mentioned nearest prior art has therefore a drawback consisting in the impossibility to control the fields of residual stresses within sufficiently wide limits.

Disclosure of the Invention

Accordingly, the object of the invention is to provide a method of producing a piece or a part thereof provided with a weld deposit, as well as a piece produced by said method, which permit increase in the performance characteristics of pieces by creating in the piece predesigned favorable fields of residual stresses.

The above object is attained by providing a method of producing a piece or a part thereof provided with a weld deposit as defined in claim 1, including the steps of electric-arc multiple-layer depositing on the piece of base metal by means of a consumable electrode, machining and tempering, whereby the deposition is carried out in such a way that at least a first layer is formed on the base metal a fusion zone being formed between the first layer and the base metal. Said first layer is formed from predetermined areas alternating in at least one direction and consisting of different metals having different linear expansion factors, where at least one of said areas of different metals that constitute said first layer contains a metal whose linear expansion factor is less than that of the piece base metal.

Prior to carrying out the single-run or multiple-run deposition, grooves are turned or embossed in the piece with predetermined spacing, depth or number of runs, whereupon said grooves are melt-sealed with a metal exhibiting a linear expansion factor lesser than that of the piece base metal in such a way that a layer is formed consisting of alternating areas of metal exhibiting a linear expansion factor lesser than that of the piece base metal and the other areas of the piece metal.

Annular grooves having predetermined spacing and depth are made, thus obtaining areas with different linear expansion factors alternating in longitudinal direction.

Regularly alternating grooves are made in circumferential direction with predetermined spacing and depth by chiselling or embossing, to obtain the alternation of the areas with different linear expansion factors only in circumferential direction.

At least the first layer is overlaid using a multiple-run deposition, the overlaid metal that corresponds to at least one run exhibiting a linear expansion factor which is less than that of the piece base metal.

At least the first layer is built up of circular beads made of alternating metals the number and location of which are predetermined and some of which have a linear expansion factor which is less than that of the piece base metal, to obtain predetermined alternating areas of different metals in at least the first layer.

At least the first layer is built up of longitudinal beads made of metals which regularly alternate in circumferential direction, the number and location of which are predetermined and some of which have a linear expansion factor which is less than that of the piece base metal, to obtain predetermined alternating areas of different metals in at least the first layer.

The grooves are melt-sealed by applying beads of overlaid metal.

The first layer is overlaid using a multiple-run deposition, the overlaid metal that corresponds to at least one run exhibiting a linear expansion factor which is less than that of the piece base metal, while at least one next layer is deposited so that the number of runs with overlaid metal exhibiting a linear expansion factor lesser than that of the piece base metal is different from that in the preceding layer.

There is also proposed a piece according to claim 10, provided with a weld deposit including at least one layer, which piece is characterized in that it has at least one layer composed of predetermined areas alternating in at least one direction and consisting of different metals exhibiting different linear expansion factors, where at least one of the areas of different metals that constitute said layer contains a metal whose linear expansion factor is less than that of the piece base metal.

Below explanation of the relation between the claimed combination of essential features and the achieved technical result are presented.

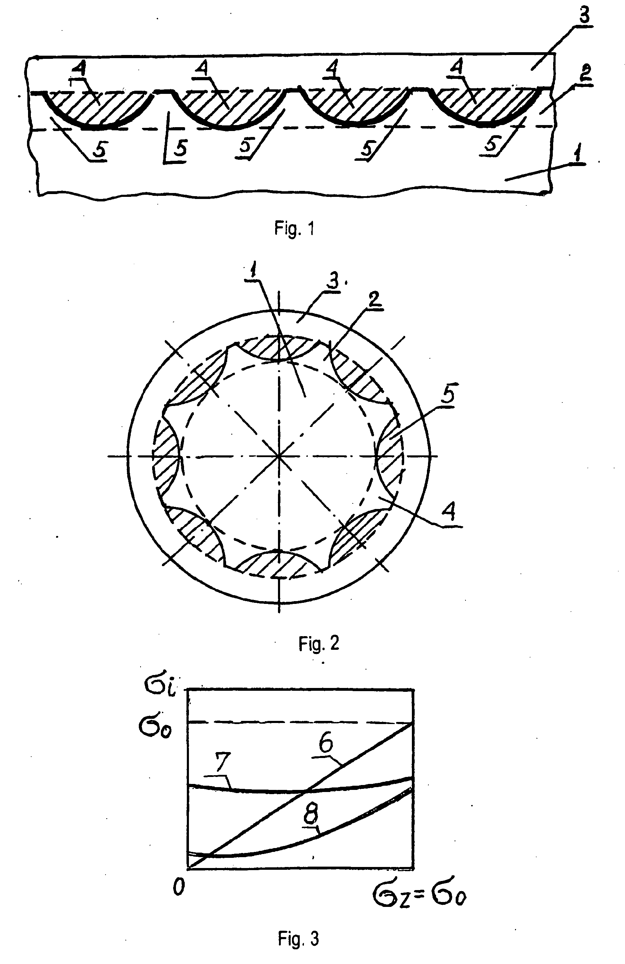

Figs.1 and 2 schematically show, respectively, longitudinal and cross section of a piece fabricated according to the claimed method. In these Figures, the piece base metal is referenced by 1; the layer produced with alternating areas of different metals, by 2; the next deposited layers, by 3; the area of the layer which includes a metal exhibiting a linear expansion factor lesser than that of the piece base metal, by 4; and the area of the layer which includes a metal exhibiting a linear expansion factor close to that of the piece base metal, by 5.

As is known, the fusion zone between the piece base metal and the weld metal constitutes the weakest point when metals are deposited (mechanical and chemical inhomogeneity, unfavorable complex of mechanical properties, adverse residual stresses) and determines the fatigue strength, the service life and the reliability of pieces provided with a weld deposit. In case of formation, within the layer, of alternating areas consisting of different metals exhibiting different linear expansion factors after tempering the piece or the part thereof provided with a weld deposit, volumetric residual stresses arise in this layer due to the difference in linear expansion factors. The amount of these residual stresses is dependent on a number of parameters, such as the mechanical and thermal properties of the metals forming the transition zone; the sizes of the alternating areas having different linear expansion factors and their location within the layer; the thickness and number of the deposited layers that constitute the transition zone. By changing the above-listed parameters, it becomes possible to control the residual stress level in said layer.

In the course of operation of pieces provided with a weld deposit, stresses that are due to an external load are combined with the previously formed residual stresses. These total volumetric stresses govern the fatigue strength, service life and reliability of pieces during their operation. Taking into account the fact that the fusion zone between the piece base metal and the weld metal is the weakest point, one can substantially increase the fatigue strength of this layer by pre-creating there such residual stresses that would cause a situation when in all the areas of said layer the change in the forming energy at the destructive stage of the loading cycle (typically, in the tension half-cycle) will be lesser with respect to the change in the forming energy of the same areas in the absence of residual stresses.

Such a change in the forming energy may be expressed through the change in the intensity of stresses (or through the equivalent stress). The intensity of stresses, e.g. in cylindrical coordinates, may be written in the following form:

$$\sigma_i = \frac{\sqrt{2}}{2} = \sqrt{(\sigma_r - \sigma_z)^2 + (\sigma_z - \sigma_t)^2 + (\sigma_t - \sigma_r)^2 + 6\tau^2} \ ,$$

where

$\sigma_i$ = intensity of stresses,
$\sigma_r$, $\sigma_z$, $\sigma_t$ = normal radial, longitudinal and circumferential stresses, and
$\tau$ = tangential stresses.

Let us consider for example a change in the intensity of the stresses arising in a cylinder under uniform tension/compression with the amplitude of the applied external longitudinal stresses equal to $\pm\sigma_0$. It is the hazardous (destructive) stage of the loading cycle that will be the object of examination. Fig.3 shows a graph illustrating changes in the intensity of stresses at the above-mentioned stage of the cycle (Y-axis) versus variation of the external longitudinal stresses in the range from 0 to $\sigma_0$.

In the absence of previously created residual stresses, this curve will be, for all the points pertaining to the cylinder cross-section, of linear character (straight line 6).

However, the situation becomes different after implementation of the claimed method (see Fig. 1). Owing to the existence of residual stresses previously created within the layer, the dependence between the change in the intensity of total stresses (i.e. of the sum of residual stresses and those due to the external load) and the applied external longitudinal stresses will be nonlinear. For those areas of the coated layer whose linear expansion factor is less than that of the piece base metal, this dependence corresponds to curve 7, and for those areas of the layer having a linear expansion factor which is close to that of the piece base metal, to curve 8. It is evident that after implementation of the claimed method, the change in the intensity of stresses (and, consequently, in the forming energy) within the layer will be substantially lower than in the absence of pre-created residual stresses. Therefore, residual stresses allow the actual external load affecting the weakest layer (i.e. the transition zone between the piece base metal and the weld metal) to be decreased, resulting in increase in the durability of said layer, which inevitably leads to increase in the fatigue strength and the service life of the piece as a whole.

The method of the invention is implemented as follows. Preliminary favorable residual stresses are created, depending on particular pieces and the external loads corresponding to their operating conditions, by controlling appropriate parameters (such as the mechanical and thermal properties of the metals constituting the transition zone; the sizes of alternating areas having different linear expansion factors and their location within the layer; the thickness and number of the deposited layers forming the transition zone) on the basis of calculations made by conventional techniques and determining the residual stress level in the piece provided with a weld deposit and its behavior during operation.

According to the claimed method, the layer (layers) constituting the transition zone between the piece base metal and the weld metal may be formed by machining of the piece surface to be provided with a weld deposit and by subsequent deposition of metal into the recesses produced during machining. Different types of machining can be used, such as cutting or embossing.

The above-mentioned layer may be formed by weld deposition, with alternation of metals having different linear expansion factors. In so doing, at least one of the overlaid metals forming the layer must have a linear expansion factor which is less than that of the piece base metal. For this, multiple-run deposition is the most preferable technique.

Piece coatings in accordance with the present invention may have layers made of different metals. In such a case it is advisable to form a transition between adjacent deposited metals. Such a transition will contain at least one layer consisting of predetermined areas alternating in at least one direction and made of different metals exhibiting different linear expansion factors, so that at least one of the areas of different metals constituting the layer will contain a metal whose linear expansion factor is less than that of the piece base metal.

The novelty of the invention consists in the above-described execution of the deposition which practically permits creation of favorable residual stresses in the piece. The fields of residual stresses are generated due to the difference in properties between the base metal and individual areas of the weld metal. This represents powerful and reliable means for controlling the fields of residual stresses. Thanks to the use of materials having different properties and to the modification, on the basis of a correctly calculated forecast, of their alternation order, the layers thickness, the penetration depth, etc., it becomes possible to obtain residual stresses of variable intensity and distribution across a section passing through the piece, which results in increase in the strength and operational reliability of pieces fabricated or repaired in accordance with the invention.

Further, the above-indicated technical effect is achieved by providing a piece fabricated using the claimed method. Such a piece provided with a weld deposit has at least one layer consisting of predetermined areas alternating in at least one direction and made of different metals exhibiting different linear expansion factors, so that at least one of the areas of different metals constituting the layer contains a metal whose linear expansion factor is less than that of the piece base metal. Restored and/or hardened pieces operate to the best advantage.Actually a 2 to 8 times increase in the overhaul period of hardened pieces has been observed, depending upon the kind of the piece.

The claimed combination of essential features shows a novel synergic property consisting in that the proposed execution of the depositing operation in the claimed method, as well as the proposed deposited layer in the piece fabricated using this method permits designing beforehand favorable fields of residual stresses that allow the service life, the overhaul period and the operational reliability to be increased.

The claimed invention is industrially applicable and has been tested in conditions of industrial production.

Brief Description of the Drawings

The following detailed description is made with reference to the accompanying drawings, in which:

Figs.1 and 2 schematically show a longitudinal section and a cross section of a piece provided with a weld deposit and having a layer consisting of alternating areas made of metals exhibiting different linear expansion factors;

Fig.3 schematically shows the dependence between the intensity of stresses in different areas of the piece provided with a weld deposit and the applied longitudinal external load at the tension stage of the loading cycle;

Figs.4 to 6 illustrate the formation of a layer consisting of alternating areas made of metals exhibiting different linear expansion factors in a case where a groove is cut in the piece base metal;

Figs.7 to 10 illustrate the formation of a layer consisting of alternating areas made of metals exhibiting different linear expansion factors in case of multiple-run deposition;

Figs.11 to 13 illustrate the formation of a layer having several deposited sub-layers and consisting of alternating areas made of metals exhibiting different linear expansion factors in case of multiple-run deposition;

Figs.14 and 15 illustrate the formation of a layer consisting of areas alternating in circumferential direction and made of metals exhibiting different linear expansion factors in case of pre-chiselling longitudinal grooves in the piece base metal; and

Figs.16 and 17 illustrate the formation of a layer consisting of areas alternating in longitudinal direction and made of metals exhibiting different linear expansion factors, which layer is formed by overlaying circular beads, in case of repairing a part of the piece surface.

Preferred Embodiments

The practical implementation of the claimed invention is illustrated below with the aid of the following Examples.

Example 1

This Example relates to fabrication of a shaft 250 mm in diameter and 4,000 mm long with a corrosion-resistant overlay 5 mm thick. The shaft to be faced is made of carbon pearlitic constructional steel with a carbon content of 0.35% (known under the name of Steel 35). This steel has a linear expansion factor of $14 \cdot 10^{-6}$ 1/degree.

The overlaying is carried out in two helical runs of the same direction with the lead of each helix equal to 13 mm.

The shaft to be faced is positioned in an appropriate welding installation that can be fitted on a conventional lathe. The carriage of the lathe carries a welding head for feeding a welding wire, and a tool holder. The welding installation is equipped with an induction heater for preheating the pieces to be treated prior to overlaying.

After the shaft, having the form of a forged piece, is positioned, its external surface is roughened to a diameter for facing.

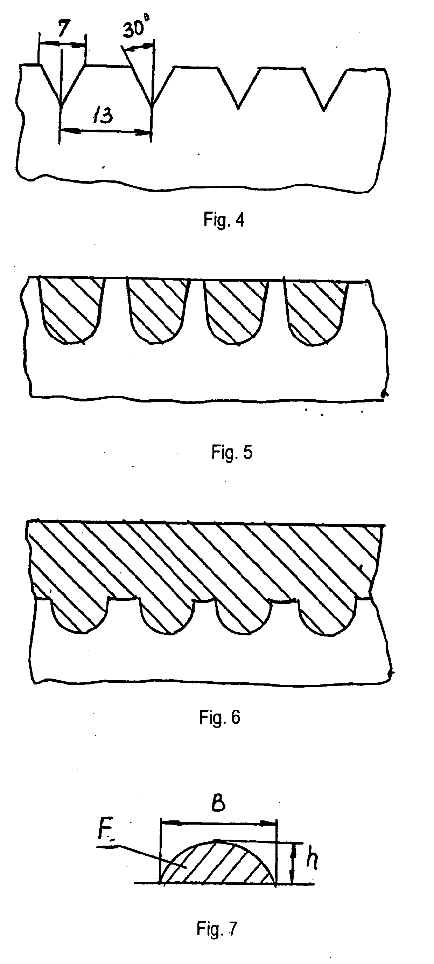

Then, a cutter for cutting an equilateral triangular thread is fixed in the tool holder. Thereupon, a groove 6 mm deep with an apex angle of 60° is cut. This groove is cut in a 13 mm lead helix in accordance with the first run of the subsequent deposition (Fig.4). After the groove is cut, the end of the shaft about 250 mm long is heated by means of the induction heater up to 200°C. Thereafter, the induction heater is removed or shifted aside, the welding head is positioned in such a way that the electrode wire is oriented vertically toward the apex of the groove that has been cut, and melt sealing of this groove is carried out in a single run with a lead of 13 mm. In this manner, the first layer is formed which consists of alternating areas of piece metal and areas formed by melt sealing of the grooves (Fig. 5).

The consumable electrode is formed by a welding wire 2 mm in diameter made of high-chromium steel $C_B$-12X13. The linear expansion factor of this welding wire material is $10 \cdot 10^{-6}$. 1/degree. The flux used is AH-26c.

The deposition conditions are set as follows: the deposition rate is about 25 m/h, the arc current is 200 A, and the arc voltage is 30 V.

Next, the deposition of a second layer is carried out in two runs. When starting the first-run overlaying, the welding head is positioned exactly above the center of the melt-sealed groove. Upon completion of the deposition of said second layer, the welding head is again brought to the initial portion of the surface to be faced, an initial shift of 6.5 mm is set for the burner, and the second-run overlaying is started. Fig.6 represents a longitudinal section of the shaft after deposition of the second layer. One can clearly see a layer consisting of metals exhibiting different linear expansion factors, the weld metal having in this case a linear expansion factor lesser than that of the piece base metal.

Subsequent weld layers are applied in the same manner as the second one, using the same welding materials and conditions.

After the overlay of required thickness has been applied to the shaft, the latter is cooled without stopping its rotation. Thereafter, the shaft is subjected to tempering in vertical position. To this end, it is put vertically in a pit furnace, or an induction heater is mounted on the shaft surface after the shaft has been wrapped with two layers of heat-resistant material. Thermal treatment of the shaft provided with a weld deposit is performed under the following conditions: heating to 620-650°C at a rate of 80°C per hour, holding at this temperature for 4 hours, and cooling in the furnace or in the inductor.

Finally, machining of the faced shaft is carried out.

Example 2

This Example relates to fabrication of a ship propeller shaft 400 mm in diameter with a cylindrical portion to be faced 6,000 mm long. The shaft must have a corrosion-resistant overlay over the entire length of the cylindrical portion. It is made of carbon pearlitic constructional steel with a carbon content of 0.4% (Steel 40). This steel has a linear expansion factor equal to $14 \cdot 10^{-6}$ 1/degree. When fabricating such a faced shaft, the same welding installation as in Example 1 is used.

Before the first layer is applied, the cylindrical portion of the shaft forging is turned to a diameter for facing.

Thereupon, preparations are made for depositing the first layer. The technique used is a two-run overlaying. The consumable electrode for performing the first run of the first layer is a welding wire 2 mm in diameter made of high-chromium steel $C_B$-12X13. This welding wire material has a linear expansion factor equal to $10 \cdot 10^{-6}$ 1/degree. The flux used is AH-26c. The deposition conditions are set as follows: the deposition rate is about 28 m/h, the arc current is 250 A, and the arc voltage is 34 V. Prior to starting the deposition, one of the shaft ends is heated up to 250°C.

Next the application of the first run for the first layer is carried out. The relative pitch $\alpha$ of the welds is preset to be equal to the coefficient $\Psi$ of utilization of the area of the projecting portion of the beads being deposited. This coefficient $\Psi$ is defined by the following relationship:

$$\Psi = \frac{F}{Bh},$$

where

$F$ = actual cross-sectional area of the projecting portion of the deposited beads of the consumable electrode metal,
$B$ = width of the deposited beads, and

$H$ = height of the projecting portion of the deposited beads (Fig. 7).

Under the above-mentioned welding conditions, the width B of the deposited beads will be equal to 14 mm, and the coefficient Ψ, to 0.67. It is known that the relative pitch $\alpha$ is the ratio of the beads spacing "m" to their width, so that taking into account that $\alpha = \Psi$, the beads spacing in the deposited layer should be equal to 9.4 mm. In these conditions, consideration must be given to the fact that the geometrical dimensions of the second-run deposited bead must be close to those of the first-run bead. The pitch H of the multiple-run deposition is determined from the following expression:

$$H = \frac{\pi D m p}{\sqrt{\pi^2 D^2 - m^2}},$$

where

D = shaft diameter,
p = number of deposition runs.

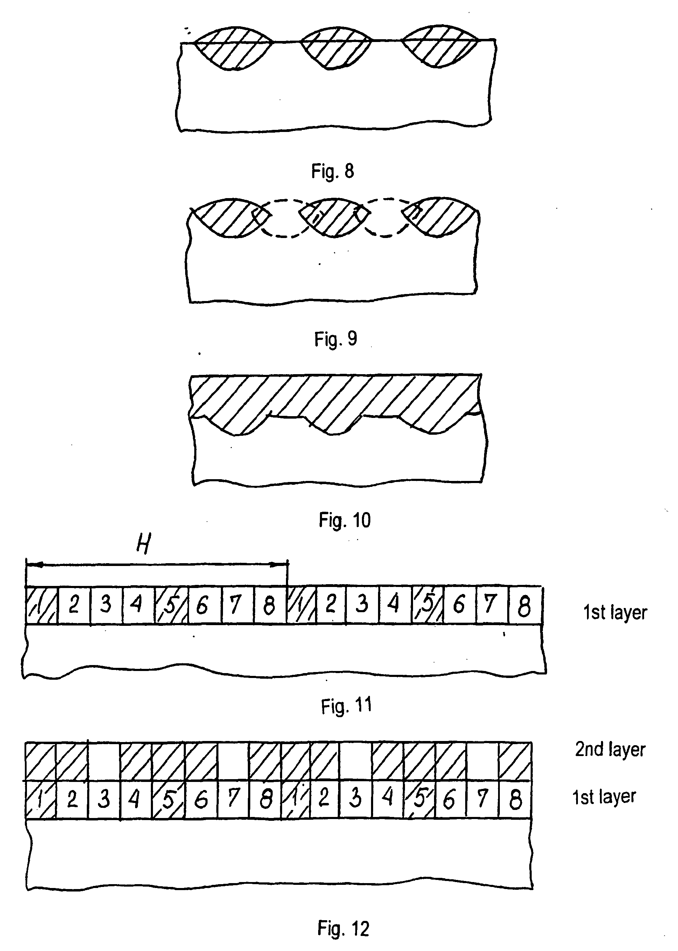

In our particular case, according to the above formula, the deposition pitch H = 18 mm. Fig.8 shows a longitudinal section of the shaft after deposition of the first run for the first layer.

Next, the welding head is replaced in its initial position and an initial shift of 9 mm is set for this head in order to proceed to the application of the second run for the first layer to be applied. The consumable electrode used for performing the second run of the first layer is a welding wire 2 mm in diameter made of steel $C_B$-18XMA. This welding wire material has a linear expansion factor equal to $14 \cdot 10^{-6}$ 1/degree. The flux used is OCLI-45. The deposition conditions are set as follows: the deposition rate is about 20 m/h, the arc current is 250 A, and the arc voltage is 30 V.

In this case, the geometrical dimensions of the bead are close to those of the first-run bead. The deposition is carried out with the same pitch H of 18 mm. Fig.9 represents a longitudinal section of the shaft after deposition of the entire first layer.

Thereupon, the second layer is applied. This deposition is performed with the same parameters as for the first layer, with the difference that the second run for the second layer is also made by using high-chromium steel $C_B$-12X13 for the electrode wire. Fig.10 represents a longitudinal section of the shaft after deposition of the second layer. One can clearly see a layer consisting of metals exhibiting different linear expansion factors, there being formed alternating areas made of a metal having a linear expansion factor lesser than that of the piece base metal.

The subsequent weld layers are applied in the same manner as the second one, using the same welding materials and conditions.

After the overlay of required thickness has been applied to the shaft, the latter is cooled without stopping its rotation. Thereafter, the shaft is subjected to tempering in vertical position. To this end, it is put vertically in a pit furnace, or an induction heater is mounted on the shaft surface after the shaft has been wrapped with two layers of heat-resistant material. Thermal treatment of the shaft provided with a weld deposit is performed under the following conditions: heating to 620-650°C at a rate of 80°C per hour, holding at this temperature for 4 hours, and cooling in the furnace or in the inductor.

Finally, machining of the faced shaft is carried out.

Example 3

This Example relates to fabrication of a ship propeller shaft 80 mm and 2,000 mm long with a deposited corrosion- and wear-resistant overlay. This piece operates under arduous conditions of alternate and impact loads. The shaft to be faced is made of carbon pearlitic constructional steel with a carbon content of 0.2% (Steel 20). This steel has a linear expansion factor equal to $14 \cdot 10^{-6}$ 1/degree.

When fabricating such a faced shaft, the same machine and substantially the same deposition conditions as in the above-described Examples are used. However, taking into consideration the relatively small diameter of the shaft and its significant length, the deposition is performed in several runs. Besides, taking into account the operating conditions of the piece when calculating favorable residual stresses, it was determined that the transition zone between the piece base metal and the weld metal shall consist of several welded-on layers. Weld materials used for forming said zone are the same as those employed in Example 2, with the same welding conditions.

For each layer, an 8-run deposition is used. The deposition pitch will be 75 mm, as in Example 2 whereas the shift of the welding head during successive application of layer beads, from the first to the eighth one, will be 75:8 = 9.4 mm.

Fig.11 schematically shows a longitudinal section of a shaft provided with a deposited first layer. The indicated numbers correspond to the consecutive numbers of the deposition runs. The hatched beads are those applied using a welding wire $C_B$-12X13, the non-hatched ones corresponding to those welded by means of the wire $C_B$-18XMA. The sequence of passes (according to the original numbers of the beads) is chosen such that the bending strains are minimized during the deposition, namely 1-5-3-7-2-6-4-8.

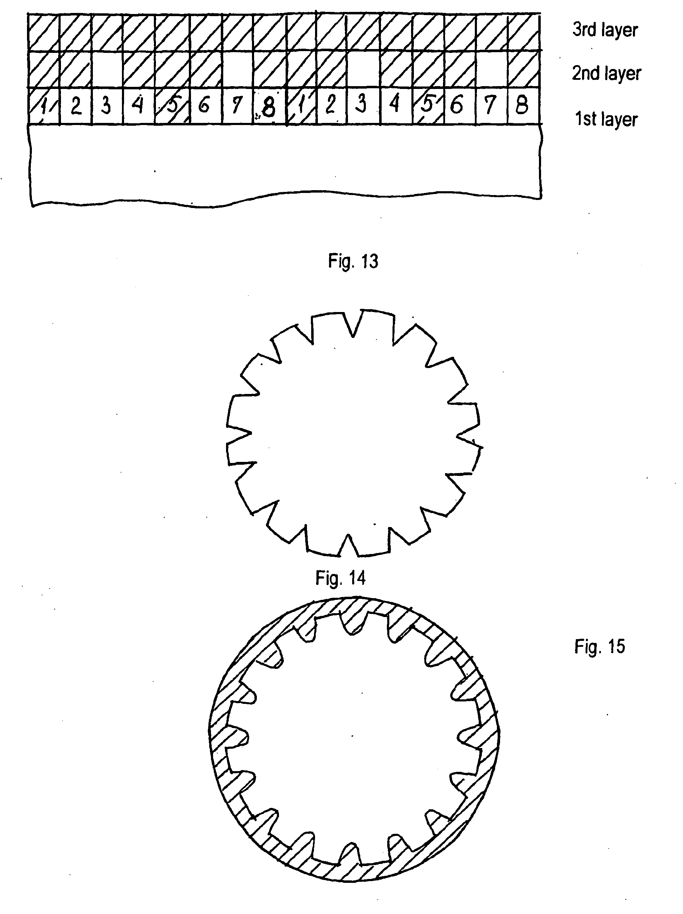

Figs.12 and 13 schematically show a longitudinal section of a shaft provided with deposited second and third layers. Beginning from the third layer, all the subsequent layers applied until the required thickness of the overlay is attained, taking into account the machining allowance, entirely consist of the metal welded on using the wire of the type $C_B$-12X13. In Figs.11 to 13, one can see the transition zone between the piece base metal and the weld metal, which zone is formed by several deposited layers with alternating areas of metals exhibiting different linear expansion factors, where there are created alternating areas made of a metal whose linear expansion factor is less than that of the piece base metal.

The subsequent treatment of the shaft is performed in the same manner as in Example 1.

## Example 4

This Example is similar to Example 3, except for the formation of the first layer of the transition zone between the piece base metal and the weld metal. Here, the first layer is formed in the same manner as in Example 1.

Two grooves 6 mm deep with an apex angle of 60° are cut on the surface of the shaft prepared for overlaying. This cutting is carried out in helix with a lead of 74 mm in accordance with the first and fifth runs of the subsequent overlay (Fig.11). Thereafter, both the grooves are melt-sealed, each in a single run, as described in Example 1. Therefore, the first layer of the transition zone between the piece base metal and the weld metal will consist of grooves melt-sealed with a high-chromium wire ($C_B$-12X13) corresponding to the first and fifth overlay runs, and of piece base metal interposed between said grooves.

The remaining operations performed with the shaft to be faced are similar to those of Example 3.

## Example 5

This Example is similar to Example 1, with the difference that, in order to ensure a minimum mixing between the weld metal and the piece base metal, as well as to reduce heat consumption in the course of melt sealing of the groove that has been cut, this process of melt sealing is conducted in two runs, but with a welding current strength lesser than that of Example 1.

The remaining operations performed with the shaft to be faced will be similar to those of Example 1.

## Example 6

This Example relates to the fabrication of a shaft 70 mm in diameter and 1,000 mm long provided with overlay ensuring an increased wear resistance. This shaft is intended to transmit torque so that it operates under heavy loads. It is made of carbon pearlitic constructional steel having a carbon content of 0.35% (Steel 35). This steel has a linear expansion factor equal to $14 \cdot 10^{-6}$ 1/degree.

Prior to depositing an overlay, 16 longitudinal grooves 6 mm deep regularly spaced along the circumference are chiselled on the shaft surface, which grooves have a triangular cross-section with an apex angle of 60° (Fig. 14). Next, the shaft is positioned in an overlaying or welding installation ensuring automatic application of longitudinal beads. Using an induction heater or a gas burner, the shaft is heated up to 200°C. Thereafter, the grooves are melt-sealed, each in a single run. In order to reduce the bending strains arising during the melt sealing operation, the sequence of melt sealing is chosen in such a way that each subsequent groove to be melt-sealed is situated opposite the preceding one across the diameter of the shaft cross-section.

As a consumable electrode, a welding wire 2 mm in diameter made of high-chromium steel $C_B$-12X13 is used. The material of this wire has a linear expansion factor equal to $10 \cdot 10^{-6}$ 1/degree. The flux used is AH-26c.

The deposition conditions are set as follows: the deposition rate is about 25 m/h, the arc current is 200 A, and the arc voltage is 30 V.

Thereafter, the shaft is mounted in an overlaying installation described in Example 1 and heated up to 200°C. Next, the deposition of an overlay is performed in 8 runs, in a manner similar to that described in Example 4 in respect of the third and subsequent layers. Upon termination of the deposition process, the operations described in Example 1 are carried out.

Fig. 15 shows a longitudinal section of the shaft provided with a weld deposit. One can clearly see a layer consisting of metals exhibiting different linear expansion factors, there being formed areas alternating in circumferential direction and made of metal whose linear expansion factor is less than that of the piece base metal.

Example 7

This Example relates to repairing a pump rod 100 mm in diameter exhibiting a heavily worn-out portion about 60 mm long formed on the surface of its cylindrical part. This rod is fabricated from a low-alloy pearlitic constructional steel with a carbon content of 0.4% and a chromium content of 1.0% (steel 40X). The linear expansion factor of this steel is equal to $14 \cdot 10^{-6}$ 1/degree. When repairing the rod, the same overlaying installation as in Example 1 is used.

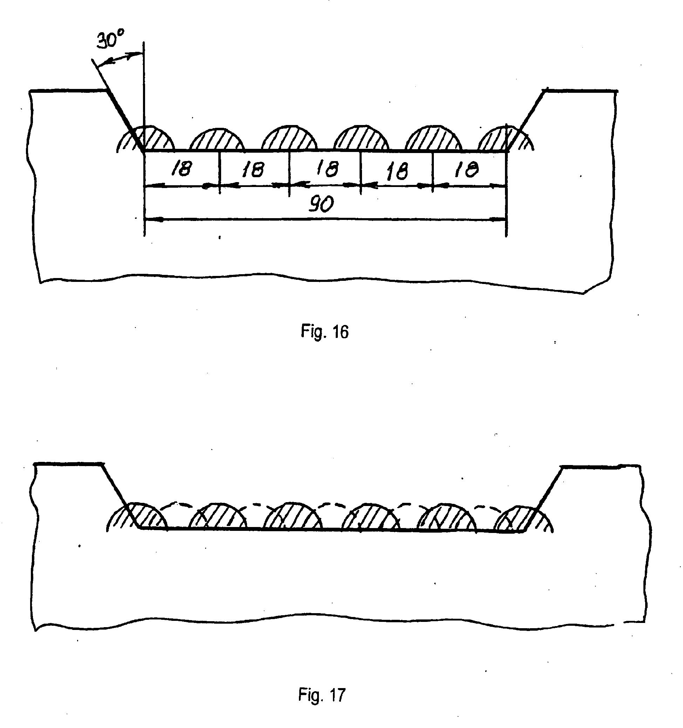

Prior to proceeding to the deposition, the worn-out portion is turned in a lathe (see Fig. 16). Then the rod is positioned in the overlaying installation and the turned region, extended by 100 mm on either end thereof, is heated up to 250°C by using an induction heater. Then, the induction heater is removed or shifted aside.

The first layer is deposited on the turned region by applying circular beads. Initially, six circular beads are applied using a high-chromium welding wire ($C_B$-12X13) 2 mm in diameter under a flux layer (Fig. 16). This wire material has a linear expansion factor of $10 \cdot 10^{-6}$ 1/degree. The flux used is AH-26c. The deposition conditions are set as follows: the deposition rate is about 28 m/h, the arc current is 250 A, and the arc voltage is 34 V. Thereupon, five circular beads are applied using a welding wire $C_B$-18XMA 2 mm in diameter under a flux of OCLI-45 type. These beads are arranged centrally between those already applied by means of the welding wire $C_B$-12X13. The deposition conditions are set as follows: the deposition rate is about 20 m/h, the arc current is 250 A, and the arc voltage is 30 V. Thus, a first layer is obtained which consists of metals exhibiting different linear expansion factors, where there are created alternating areas made of a metal whose linear expansion factor is less than that of the piece base metal (Fig. 17).

The remaining layers are applied in two runs by means of a welding wire $C_B$-12X13 with an 18 mm pitch using the above-indicated welding conditions, but with the current strength reduced by 20%. The deposition of these layers is performed until the entire turned region of the rod is filled with the overlaid metal with the machining allowance taken into account.

After the required thickness of the weld deposit is attained, the rod is subjected to cooling without stopping its rotation. Next, the rod is tempered in vertical position. To this end, an induction heater is positioned on the rod surface (the turned region extended by 100 mm on either end thereof) after the rod has been wrapped with two layers of heat-resistant material. The thermal treatment of the shaft provided with a weld deposit is performed under following conditions: heating to 620-650°C at a rate of 100°C per hour, holding at this temperature for 3 hours, and cooling in a furnace or in a inductor.

Finally, machining of the faced rod is carried out.

In the course of implementation of the invention, when carrying out multiple-layer deposition or groove cutting, it is possible to use helices of different directions in case of application of different layers or cutting grooves in multiple runs. Since all the pertinent operations are similar to those described in the above Examples, their explanation is not given here.

Industrial applicability

The Examples presented above show various procedures permitting substantially to create, within the pieces being treated, favorable fields of residual stresses that have been designed beforehand based on a relevant analysis. Such a design is performed with the help of traditional methods using parameters indicated above.

The use of the claimed invention allows repairing worn-out or damaged pieces while ensuring performance characteristics that are no worse than those of a new (intact) piece; hardening undamaged pieces; substituting cheaper materials for those used for fabricating pieces without degrading their performance; achieving good functionality of treated pieces in critical or emergency situations under conditions of incipient destruction.

**Claims**

1. A method of producing a piece (1) or a part thereof provided with a weld deposit, including the steps of electric-arc multiple-layer depositing on the piece of base metal (1) by means of a consumable electrode, machining and tempering, wherein the deposition is carried out in such a way that at least a first layer (2) is formed on the base metal forming a fusion zone with the base metal, **characterized in that** said first layer (2) is formed from predetermined areas alternating in at least one direction and consisting of different metals (4, 5) having different linear expansion factors, where at least one of said areas C of different metals that constitute said first layer (2) contains a metal whose linear expansion factor is less than that of the piece base metal (1)

2. The method according to Claim 1, **characterized in that**, prior to carrying out the single-run or multiple-run deposition, grooves are turned or embossed in the piece (1) with predetermined spacing, depth and number of runs, whereupon said grooves are melt-sealed with a metal (4) having a linear expansion factor lesser than that of the piece base metal in such a way that a layer is formed consisting of alternating areas of metal having a linear expansion factor lesser than that of the piece base metal (1) and the other areas of the piece metal (5).

**3.** The method according to Claims 1, 2, **characterized in that** annular grooves having predetermined spacing and depth are made, thus obtaining areas with different linear expansion factors alternating in longitudinal direction.

**4.** The method according to Claims 1, 2, **characterized in that** regularly alternating grooves are made in circumferential direction with predetermined spacing and depth by chiselling or embossing, to obtain the alternation of the areas with different linear expansion factors only in circumferential direction.

**5.** The method according to Claim 1, **characterized in that** at least the first layer (2) is overlaid using a multiple-run deposition, the overlaid metal (3) that corresponds to at least one run having a linear expansion factor which is less than that of the piece base metal (1).

**6.** The method according to Claim 1, **characterized in that** at least the first layer (2) is built up of circular beads made of alternating metals the number and location of which are predetermined and some of which have a linear expansion factor which is less than that of the piece base metal, to obtain predetermined alternating areas of different metals in at least said first layer (2).

**7.** The method according to Claim 1, **characterized in that** at least the first layer (2) is built up of longitudinal beads made of metals which regularly alternate in circumferential direction, the number and location of which are predetermined and some of which have a linear expansion factor which is less than that of the piece base metal, to obtain predetermined alternating areas of different metals in at least said first layer (2).

**8.** The method according to Claims 1, 2, 3, 4, **characterized in that** said grooves are melt-sealed by applying beads of overlaid metal (2, 3).

**9.** The method according to Claims 1, 5, **characterized in that** the first layer (2) is overlaid using a multiple-run deposition, with the overlaid metal (3) that corresponds to at least one run having a linear expansion factor which is less than that of the piece base metal, while at least one next layer is deposited so that the number of runs with overlaid metal having a linear expansion factor lesser than that of the piece base metal is different from that in the preceding layer.

**10.** A piece provided with a weld deposit including at least a first layer (2) said piece of base metal (1) having a multiple-layer deposit being made by means of electric-arc depositing with a consumable electrode on said piece of base metal, machined and tempered, wherein said first layer (2) has a fusion zone with the base metal (1), **characterized in that** said first layer is composed of predetermined areas alternating in at least one direction and consisting of different metals (4, 5) exhibiting different linear expansion factors, where at least one of said areas of different metals that constitute said layer contains a metal (4) whose linear expansion factor is less than that of the piece base metal (1).

**Patentansprüche**

**1.** Verfahren zum Herstellen eines Stückes (1) oder eines Teils davon, die mit einem Schweißgut versehen sind, mit den Schritten des mehrschichtigen Lichtbogenauftragens eines Grundmetalls (1) auf dem Stück mittels einer Abschmelzelektrode, des spanenden Bearbeitens und Anlassens, bei dem die Auftragung derart durchgeführt wird, dass zumindest eine erste Schicht (2) auf dem Grundmetall ausgebildet wird, die eine Schmelzzone mit dem Grundmetall bildet,
**dadurch gekennzeichnet, dass** die erste Schicht (2) aus vorbestimmten, in zumindest einer Richtung abwechselnden Bereichen gebildet ist und aus unterschiedlichen Metallen (4, 5) mit unterschiedlichen linearen Ausdehnungskoeffizienten besteht, wobei zumindest einer der Bereiche unterschiedlicher Metalle, die die erste Schicht (2) bilden, ein Metall enthält, dessen linearer Ausdehnungskoeffizient kleiner als der des Grundmetalls des Stückes (1) ist.

**2.** Verfahren nach Anspruch 1, **dadurch gekennzeichnet, dass** vor dem Durchführen der einlagigen oder mehrlagigen Auftragung in dem Stück (1) Ausnehmungen mit vorbestimmtem Abstand , Tiefe und Anzahl von Arbeitsgängen gedreht oder eingeprägt werden, woraufhin die Ausnehmungen mit einem Metall (4) schmelzversiegelt werden, das einen linearen Ausdehnungskoeffizienten besitzt, der kleiner als der des Grundmetalls des Stücks ist, derart, dass eine Schicht gebildet wird, die aus abwechselnden Bereichen eines Metalls mit einem linearen Ausdehnungskoeffizienten kleiner als der des Grundmetalls des Stücks (1) und den anderen Bereichen des Stückmetalls (5) besteht.

3.  Verfahren nach Ansprüchen 1, 2, **dadurch gekennzeichnet, dass** ringförmige Ausnehmungen mit vorbestimmtem Abstand und Tiefe hergestellt werden, womit Bereiche mit in Längsrichtung abwechselnden, unterschiedlichen linearen Ausdehnungskoeffizienten erzielt werden.

4.  Verfahren nach Ansprüchen 1, 2, **dadurch gekennzeichnet, dass** regelmäßig abwechselnde Ausnehmungen in Umfangsrichtung mit vorbestimmtem Abstand und Tiefe durch Meißeln oder Einprägen hergestellt werden, um die Abwechslung der Bereiche mit unterschiedlichen Ausdehnungskoeffizienten nur in Umfangsrichtung zu erhalten.

5.  Verfahren nach Anspruch 1, **dadurch gekennzeichnet, dass** zumindest die erste Schicht (2) unter Verwendung einer mehrlagigen Auftragung draufgelegt wird, wobei das draufgelegte Metall (3), das zumindest einem Arbeitsgang entspricht, einen linearen Ausdehnungskoeffizienten aufweist, der kleiner als der des Grundmetalls (1) des Stückes ist.

6.  Verfahren nach Anspruch 1, **dadurch gekennzeichnet, dass** zumindest die erste Schicht (2) zusammengesetzt ist aus kreisförmigen Raupen aus abwechselnden Metallen, deren Anzahl und Stelle vorbestimmt sind und von denen einige einen linearen Ausdehnungskoeffizienten besitzen, der kleiner als der des Grundmetalls des Stückes ist, um vorbestimmte, abwechselnde Bereiche unterschiedlicher Metalle in zumindest der einen ersten Schicht (2) zu erhalten.

7.  Verfahren nach Anspruch 1, **dadurch gekennzeichnet, dass** zumindest die erste Schicht (2) aus Längsraupen aus Metallen zusammengesetzt ist, die in Umfangsrichtung regelmäßig abwechseln, wobei deren Anzahl und Stelle vorbestimmt sind und von denen einige einen linearen Ausdehnungskoeffizienten aufweisen, der kleiner als der des Grundmetalls des Stückes ist, um vorbestimmte, abwechselnde Bereiche unterschiedlicher Metalle in zumindest der ersten Schicht (2) zu erhalten.

8.  Verfahren nach Anspruch 1, 2, 3, 4, **dadurch gekennzeichnet, dass** die Ausnehmungen durch Aufbringen von Raupen von draufgelegtem Metall (2, 3) schmelzversiegelt werden.

9.  Verfahren nach Anspruch 1, 5, **dadurch gekennzeichnet, dass** die erste Schicht (2) draufgelegt wird, indem eine mehrlagige Auftragung genutzt wird, mit dem draufgelegten Metall (3), das zumindest einem Arbeitsgang entspricht, mit einem linearen Ausdehnungskoeffizienten, der kleiner als der des Grundmetalls des Stückes ist, während zumindest eine nächste Schicht aufgetragen wird, so dass die Anzahl von Arbeitsgängen mit draufgelegtem Metall mit einem linearen Ausdehnungskoeffizienten kleiner als dem des Grundmaterials des Stückes sich von der in der vorhergehenden Schicht unterscheidet.

10. Stück, versehen mit einem Schweißgut, das zumindest eine erste Schicht (2) des Stückes aus Grundmetall (1) umfasst, mit einer mehrlagigen Auftragung, die hergestellt ist durch Lichtbogenauftragen eines Grundmetalls (1) auf dem Stück durch eine Abschmelzelektrode, spanend bearbeitet und angelassen wird, wobei die erste Schicht (2) eine Schmelzzone mit dem Grundmetall (1) bildet, **dadurch gekennzeichnet, dass** die erste Schicht aus vorbestimmten Bereichen zusammengesetzt ist, die in zumindest einer Richtung abwechseln und aus unterschiedlichen Metallen (4, 5) bestehen, die unterschiedliche lineare Ausdehnungskoeffizienten zeigen, wobei zumindest einer der Bereiche unterschiedlicher Metalle, die die Schicht bilden, ein Metall (4) enthält, dessen linearer Ausdehnungskoeffizient kleiner als der des Grundmetalls des Stückes (1) ist.

## Revendications

1.  Procédé de fabrication d'une pièce, ou d'une partie de celle-ci, dotée d'un dépôt apporté par soudure, incluant les étapes de déposition en couches multiples, par arc électrique, sur la pièce, d'un métal de base (1), au moyen d'une électrode consommable, d'usinage et de revenu, dans lequel la déposition est accomplie de telle manière qu'au moins une première couche (2) soit formée sur le métal de base en formant une zone de fusion avec le métal de base, **caractérisé en ce que** ladite première couche (2) est formée de zones prédéterminées, alternant en au moins une direction et consistant en différents métaux (4, 5) ayant des coefficients de dilatation linéaire différents, dans lequel au moins l'une desdites zones de métaux différents qui constituent ladite première couche (2) contient un métal, dont le coefficient de dilatation linéaire est inférieur à celui du métal de base (1) de la pièce.

2. Procédé selon la revendication 1, **caractérisé en ce que**, avant de mettre en oeuvre la déposition en une seule passe ou en passes multiples, des gorges sont réalisées par tournage ou embossage dans la pièce (1), avec un espacement, une profondeur et un nombre de passes prédéterminés, à la suite de quoi lesdites gorges sont scellées par fusion avec un métal (4) ayant un coefficient de dilatation linéaire inférieur à celui du métal de base de la pièce, de telle manière que soit formée une couche constituées de zones de métal alternant, ayant un coefficient de dilatation linéaire inférieure à celui du métal de base (1) de la pièce et des autres zones du métal (5) de la pièce.

3. Procédé selon les revendications 1, 2, **caractérisé en ce que** des gorges annulaires, ayant un espacement et une profondeur prédéterminées, sont formées, donnant ainsi des zones ayant des coefficients de dilatation linéaire alternant en direction longitudinal.

4. Procédé selon les revendications 1, 2, **caractérisé en ce que** des gorges alternant régulièrement sont formées en direction circonférentielle, avec un espacement et une profondeur prédéterminés, par ciselage ou embossage, pour obtenir l'alternance des zones ayant des coefficients de dilatation linéaire différents uniquement en direction circonférentielle.

5. Procédé selon la revendication 1, **caractérisé en ce qu'**au moins la première couche (2) est appliquée en revêtement en utilisant une déposition à passes multiples, le métal (3) appliqué en revêtement qui correspond à au moins une passe ayant un coefficient de dilatation linéaire inférieure à celui du métal de base (1) de la pièce.

6. Procédé selon la revendication 1, **caractérisé en ce qu'**au moins la première couche (2) est constituée de perles circulaires, faites de métaux alternant, dont le nombre et l'emplacement sont prédéterminés et dont certaines ont un coefficient de dilatation linéaire inférieur à celui du métal de base de la pièce, pour obtenir des zones alternant prédéterminées, faites de métaux différents en au moins ladite première couche (2).

7. Procédé selon la revendication 1, **caractérisé en ce qu'**au moins la première couche (2) est constituée de perles longitudinales, faites de métaux alternant régulièrement en direction circonférentielle, dont le nombre et l'emplacement sont prédéterminés et dont certaines ont un coefficient de dilatation linéaire inférieur à celui du métal de base de la pièce, pour obtenir des zones alternantes prédéterminées, faites de métaux différents en au moins ladite première couche (2).

8. Procédé selon les revendications 1, 2, 3, 4, **caractérisé en ce que** lesdites gorges sont scellées par fusion, par application de perles composées de métal (2, 3) appliqué en revêtement.

9. Procédé selon les revendications 1, 5, **caractérisé en ce que** la première couche (2) est appliquée en revêtement par déposition à passes multiples, le métal (3) appliqué en revêtement correspondant à au moins une passe ayant un coefficient de dilatation linéaire inférieur à celui du métal de base de la pièce, tandis qu'au moins une couche suivante est déposée de telle manière que le nombre de passes avec le métal appliqué en revêtement ayant un coefficient de dilatation linéaire inférieur à celui du métal de base de la pièce soit différent de celui de la couche précédente.

10. Pièce dotée d'un dépôt de rechargement par soudure, incluant au moins une première couche (2), ladite pièce en métal de base (1) ayant un dépôt multicouches fabriqué au moyen d'une déposition par arc électrique, avec une électrode consommable sur ladite pièce de métal de base, soumise à un usinage et à un revenu, dans lequel ladite première couche (2) présente une zone de fusion avec le métal de base (1), **caractérisée en ce que** ladite première couche est formée de zones prédéterminées, alternant en au moins une direction et consistant en différents métaux (4, 5) présentant des coefficients de dilatation linéaire différents, dans lequel au moins l'une desdites zones de métaux différents qui constituent ladite couche contient un métal (4), dont le coefficient de dilatation linéaire est inférieur à celui du métal de base (1) de la pièce.

Fig. 1

Fig. 2

Fig. 3

Fig. 4

Fig. 5

Fig. 6

Fig. 7

Fig. 8

Fig. 9

Fig. 10

Fig. 11

| | 2 | 3 | 4 | 5 | 6 | 7 | 8 | | 2 | 3 | 4 | 5 | 6 | 7 | 8 |

1st layer

Fig. 12

2nd layer

1st layer

| | | | | | | | | | | | | | | | | |
|---|---|---|---|---|---|---|---|---|---|---|---|---|---|---|---|---|
| | | | | | | | | | | | | | | | | 3rd layer |
| | | | | | | | | | | | | | | | | 2nd layer |
| 1 | 2 | 3 | 4 | 5 | 6 | 7 | 8 | 1 | 2 | 3 | 4 | 5 | 6 | 7 | 8 | 1st layer |

Fig. 13

Fig. 14

Fig. 15

Fig. 16

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4484959 A
- SU 80036 W
- WO 8103138 A

- US 4484959A A
- JP 10274012 A
- JP 06346708 B